(19) Europäisches Patentamt
European Patent Office
Office européen des brevets

(11) EP 4 300 904 A2

(12) EUROPEAN PATENT APPLICATION

(43) Date of publication:
**03.01.2024 Bulletin 2024/01**

(21) Application number: **23181798.2**

(22) Date of filing: **27.06.2023**

(51) International Patent Classification (IPC):
***H04L 27/26*** *(2006.01)*

(52) Cooperative Patent Classification (CPC):
**H04L 27/261; H04L 27/2614**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.06.2022 US 202263355796 P**
**21.06.2023 US 202318338425**

(71) Applicant: **Mavenir Systems, Inc.**
**Richardson, TX 75081 (US)**

(72) Inventors:
- **PISEK, Eran**
  **Plano, 75025 (US)**
- **LOURDU RAJA, Charles Santhosam**
  **560048 Bangalore (IN)**
- **VIJAYAN, Logeshwaran**
  **560066 Bangalore (IN)**

(74) Representative: **Studio Torta S.p.A.**
**Via Viotti, 9**
**10121 Torino (IT)**

(54) **MULTI-LAYER PAPR REDUCTION**

(57) A method for reducing peak-to-average power ratio (PAPR) of a multi-layer precoder matrix (PM)-combined demodulation reference signal (DMRS) symbol includes one of: a) performing, at a distributed unit (DU), a modified orthogonal cover code (M-OCC) method to reduce the PAPR of the multi-layer PM-combined DMRS, wherein the M-OCC method comprises; i) multiplying a PM with a specified multiplication factor in frequency domain to obtain a modified PM, and ii) subsequently multiplying at least one of multiple downlink (DL) layers with the modified PM; or alternatively b) performing, at a distributed unit (DU), a modified cyclic delay diversity (M-CDD) method to reduce the PAPR of the multi-layer PM-combined DMRS, wherein the M-CCD method comprises; i) multiplying at least one of multiple frequency-domain downlink (DL) layers with a specified linear phase shift to obtain phase-shifted DL layers, and ii) subsequently multiplying the phase-shifted DL layers with the PM.

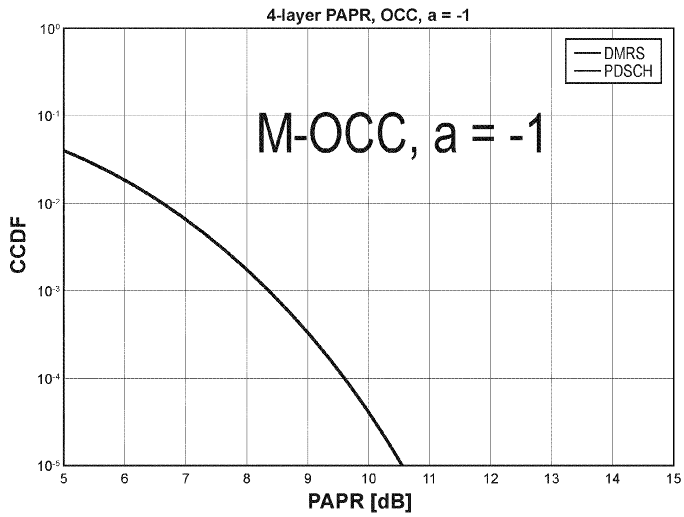


FIG. 4b

EP 4 300 904 A2

## Description

BACKGROUND OF THE INVENTION

The present disclosure relates to Open Radio Access Network (O-RAN) for 5G-based mobile networks, and relates more particularly to a method for reducing Multi-layer Precoder Matrix (PM)-combined DeModulation Reference Signal (DMRS) symbols' Peak-to-Average Power Ratio (PAPR).

The 3$^{rd}$ Generation Partnership Project (3GPP) 5G New Radio (NR) Release 15 specification supports enhanced mobile broadband and basic ultra-reliable low-latency communications (URLLC) in spectrum up to 52.6GHz. In the 5G NR Release 15, multi-layer Precoder Matrix (PM)-combined Demodulation Reference Signal (DMRS) symbols have over 2dB higher Peak-to-Average Power Ratio (PAPR) than the multi-layer PM-combined physical downlink shared channel (PDSCH) symbols in the same slot, causing the radio frequency (RF) power amplifier to backoff its output power by over 2dB to maintain the output signal-to-interference-plus-noise ratio (SINR) and avoid signal saturation. As used in the present specification, the term "layer(s)" refer to the number of parallel stream(s) sent, as part of Open Systems Interconnection (OSI) networking model Layer 1 (Physical Layer), to the user equipment (UE). As an example, when "3 layers" or "4 layers" are mentioned, the intended meaning is 3 or 4 parallel streams sent over-the-air to the UE.

5G NR Release 15 specification defines the DMRS scrambling code for 1 code division multiplexing (CDM) group (up to 2 antenna ports) to be independent between the layers using Hadamard code (1 1; 1 -1). Therefore, for up to 2-layers, the Precoding Matrix (PM)-combined DMRS symbols do not show any correlation between the layers, and hence any PM combination between them will be sufficiently random to not cause higher PAPR than the corresponding Physical Downlink Shared Channel (PDSCH) symbols in the same slot. However, for 3-layer and 4-layer transmissions, 2 CDM groups are employed, and applying the PM on 3-layer ranks and above, uses the repetition of the 1 and 2-layer scrambling code in layer 3 and layer 4 causing correlation between the layers, which leads to the DMRS symbol PAPR to be higher than the corresponding PM-combined PDSCH symbol (which is fully random, independent, and uniformly distributed between the layers in frequency domain).

FIG. 1 illustrates the PAPR gap between the DMRS PAPR and the PDSCH PAPR, using 2 CDM groups. In FIG. 1, which charts Complementary Cumulative Distribution Function (CCDF) on the y-axis and PAPR (units of decibel (dB)) on the x-axis, the following waveforms are shown: Cyclic-Prefix Orthogonal Frequency Division Multiplexing (CP-OFDM) waveform 1001 for PDSCH; 1-layer DMRS 1002; 2-layer DMRS 1003; 4-layer DMRS 1004; and 6-layer DMRS 1005. FIG. 1 shows that using 2 CDM groups for the PM-combined DMRS symbol, the PAPR gap increases with the number of layers, e.g., even exceeding 11 dB PAPR at CCDF = $10^{-5}$. It should be noted that in the 2-layer case given in FIG. 1, ports 0 and 2 were used, which implies 2 CDM groups usage even for 2-layer; this is not the case in tests where only ports 0, 1 are used that imply 1 CDM group usage and, as described below, does not show any gap between the DMRS and PDSCH PAPRs. In addition, DMRS ports 0-2 (0, 1, and 2) also use 2 DMRS CDM groups (1 DMRS CDM group for ports 0 and 1, and the other DMRS CDM group for port 2). In this case, even though ports (0 and 2) and ports 0-2 both use 2 DMRS CDM groups each, the ports 0-2 show higher PAPR since they use 3 DMRS layers as opposed to ports (0 and 2) that use only 2 DMRS layers.

Currently, two techniques are utilized to work around the above-noted DMRS PAPR issue. The first conventional technique is to back off the power amplifier (PA) power by 2 dB, which technique removes the DMRS PAPR issue since the DMRS high PAPR will not cause the PA to saturation. However, this technique is not optimal because the RF side is not fully utilized, which means the gNB will suffer from reduced coverage and lower quality. The second conventional technique is to upgrade to 5G NR Release 16. In 5G NR Release 16, the DMRS PAPR issue is resolved by distinguishing in the DMRS scrambling seed (Cinit) between the CDM groups. However, this technique is problematic because most of the current product designs are compliant with 5G NR Release 15, and major modifications would be required to upgrade the products from 5G NR Release 15 to 5G NR Release 16 (i.e., not just involving the DMRS scrambling seed), both on the next generation node B (gNB) side as well as on the user equipment (UE) side.

Accordingly, there is a need for a more efficient and elegant solution to mitigate the Multi-layer DMRS PAPR issue.

SUMMARY OF THE INVENTION

In the present disclosure, multiple example methods are proposed to reduce the time-domain Multi-layer PM-combined DMRS symbol PAPR to the same PAPR level as the corresponding PDSCH symbols in the same slot.

According to an example embodiment of the present disclosure, the Multi-layer PM-combined DMRS symbol PAPR reduction is achieved by increasing the randomness level between the layers of the DMRS symbol in frequency-domain.

According to an example embodiment of the present disclosure, increasing the randomness level between the DMRS layers is performed in a unique way that preserves the UE receiver Block Error Rate (BLER) performance by applying precoder resource group (PRG)-based segmentation techniques to the proposed methods.

According to an example embodiment of the present disclosure, a Modified Orthogonal Cover Code (M-OCC) method is utilized to mitigate the Multi-layer DMRS PAPR issue. The M-OCC method multiplies the PM-matrix with a factor in frequency domain, prior to the multiplication with the downlink (DL) layers.

According to an example embodiment of the present disclosure, in a 4-layer example of the M-OCC method (shown in FIG. 2), layer-3 (from 0-3 layers) is multiplied by the factor "a" for all the symbol Physical Resource Blocks (PRBs), while keeping layers 0, 1, and 2 unmodified. In an example embodiment, a = -1 factor is applied to all layer-3 resource elements (REs).

According to an example embodiment of the present disclosure, in a 3-layer example of the M-OCC method (shown in FIG. 5), a multiplication factor "b" is applied to layer-2, while keeping layers 0 and 1 unmodified. The value of the multiplication factor b can be changed within the symbol based on a given segmentation method.

According to an example embodiment of the present disclosure, in a 3-layer example of the M-OCC method (shown in FIG. 6), the b value is alternating between -1 and 1 based on the precoder resource group (PRG) length of 2 PRBs and 4 PRBs.

According to an example embodiment of the present disclosure, a Modified Cyclic Delay Diversity (M-CDD) method is utilized to mitigate the Multi-layer DMRS PAPR issue. The M-CDD method multiplies the frequency-domain downlink (DL) layers with a linear phase shift prior to the multiplication with the precoder matrix. The slope of the phase shift "d" in frequency domain translates to the cyclic delay in time-domain. The cyclic delay "d" can range from 0 to the symbol length N-1.

According to an example embodiment of the present disclosure, in a 4-layer example of the M-CCD method (shown in FIG. 3), layer-2 and layer-3 (from 0-3 layers) are multiplied by a linear phase shift for all the symbol PRBs, while keeping layers 0 and 1 unmodified.

According to an example embodiment of the present disclosure, in a 3-layer example of the M-CCD method (shown in FIG. 7), only layer-2 is multiplied with the linear phase shift.

According to an example embodiment of the present disclosure, a segmentation "step" method can be applied to the linear phase shift, creating a fixed phase shift to a "step" number of resource elements (REs). The "step" length can be based on the PRG length of 2 PRBs and 4 PRBs.

BRIEF DESCRIPTION OF THE DRAWINGS

FIG. 1 illustrates the PAPR gap between the DMRS PAPR and the PDSCH PAPR.

FIG. 2 is a diagram illustrating an example embodiment of a 4-layer example of a Modified Orthogonal Cover Code (M-OCC) method.

FIG. 3 is a diagram illustrating an example embodiment of a 4-layer example of Modified Cyclic Delay Diversity (M-CDD) method.

FIG. 4a is a diagram illustrating a reference PAPR gap between PDSCH and DMRS with no corrective action applied for a 4-layer example.

FIG. 4b is a diagram illustrating PAPR and CCDF for an example embodiment of a 4-ayer M-OCC method with a = -1.

FIG. 4c is a diagram illustrating PAPR and CCDF for an example embodiment of a 4-layer M-CCD method with delay = 400, and 4 PRBs.

FIG. 4d is a diagram illustrating PAPR and CCDF for an example embodiment of a 4-layer M-CCD method with delay = 40, and 2 PRBs.

FIG. 5 is a diagram illustrating an example embodiment of a 3-layer example of the M-OCC method.

FIG. 6 is a diagram illustrating an example embodiment of a 3-layer example of a PRG-based M-OCC method.

FIG. 7 is a diagram illustrating an example embodiment of a 3-layer example of the M-CCD method.

FIG. 8a is a diagram illustrating a reference PAPR gap between PDSCH and DMRS with no corrective action applied for a 3-layer example.

FIG. 8b is a diagram illustrating PAPR and CCDF for an example embodiment of a 3-ayer M-OCC method with 2PRBs.

FIG. 8c is a diagram illustrating PAPR and CCDF for an example embodiment of a 3-layer M-OCC method with 4 PRBs.

FIG. 8d is a diagram illustrating PAPR and CCDF for an example embodiment of a 3-layer M-CCD method with delay = 40, and 2 PRBs.

## DETAILED DESCRIPTION OF THE INVENTION

According to a first example embodiment of the method according to the present disclosure, a Modified Orthogonal Cover Code (M-OCC) method is utilized to mitigate the multi-layer DMRS PAPR issue. The M-OCC method multiplies the PM-matrix with a factor in frequency domain, prior to the multiplication with the downlink (DL) layers. According to an example embodiment, the M-OCC method is implemented in the PHY layer (L1), e.g., at the distributed unit (DU) of the radio access network (RAN).

According to an example embodiment of the present disclosure, in a 4-layer example of the M-OCC method (shown in FIG. 2), layer-3 (from 0-3 layers) is multiplied by the factor "a" for all the symbol Physical Resource Blocks (PRBs), while keeping layers 0, 1, and 2 unmodified. In other words, the 4-layer example of the M-OCC method shown in FIG. 2, DMRS of port 3 is rotated by a fixed phase "a". In an example embodiment, a = -1 factor is applied to all layer-3 resource elements (REs). The N-Layer (N ports) M-OCC calculation is represented as follows:

$$ANT|RE(m,j) = \sum_{k=0}^{N-1} PM(m,k) PORT|RE(k,j)$$

where PM is the precoder matrix, *PORT|RE*(*k*, *j*) is the DMRS entry for port (layer) k at resource element (RE) j, and *ANT|RE*(*m*, *j*) is the output DMRS symbol value for Antenna m at RE j. r(s) {s = 0: (Nsc/2)-1} (Nsc is the number of REs per symbol} are the DMRS values (e.g., as defined by 3GPP 5G NR Release 15) in the example shown in FIG. 2. The same operation needs to be applied also for the corresponding data symbols (PDSCH) in the same slot.

According to an example embodiment of the present disclosure, in a 4-layer example of the M-CCD method shown in FIG. 3, pre-PMI frequency domain layer-2 and layer-3 (from 0-3 layers) are multiplied by a linear phase shift for all the symbol PRBs, while keeping layers 0 and 1 unmodified, as follows:

$$e^{\frac{j2\pi\bar{k}}{N}d}, \quad k = \{0..2047\}, \quad N = 2048, \quad \bar{k} = \left\lfloor \frac{k}{step} \right\rfloor step$$

where "d" is the cyclic delay, "step" is the number of REs (SCs) that will use the same phase shift value based on d, and "segments" (shown in FIG. 3) are the number of different phase shift values within a symbol of N REs. As shown in FIG. 3, the step value can be modified based on the tradeoff between PAPR improvement vs. calculation complexity (every "step" SCs or REs), i.e., the smaller the "step", the more segments to calculate the phase shift.

According to an example embodiment of the present disclosure, in a 3-layer example of the M-OCC method for PAPR mitigation shown in FIG. 5, a multiplication factor "b" is applied to layer-2, while keeping layers 0 and 1 unmodified. The value of the multiplication factor b can be changed within the symbol based on a given segmentation method. The example shown in FIG. 5 illustrates a 3-layer DRMS ports and antenna port mapping using PMI matrix (i.e., 3GPP 5G NR Release 15, Type 1 single-symbol DMRS resource mapping for up to 3-layer transmissions). The N-Layer (N ports) M-OCC calculation is represented as follows:

$$ANT|RE(m,j) = \sum_{k=0}^{N-1} PM(m,k) PORT|RE(k,j)$$

where PM is the precoder matrix, *PORT|RE*(*k*,*j*) is the DMRS entry for port (layer) k at resource element (RE) j, and *ANT|RE*(*m*, *j*) is the output DMRS symbol for Antenna m at RE j. r(s) {s = 0: (Nsc/2)-1} (Nsc is the number of REs per symbol} are the values (e.g., as defined by 3GPP 5G NR Release 15) in the example shown in FIG. 5. The same operation needs to be applied also for the corresponding data symbols (PDSCH) in the same slot.

According to an example embodiment of the present disclosure, in a 3-layer example of the M-OCC method (shown in FIG. 6), the b value is alternating between -1 and 1 based on the precoder resource group (PRG) length of 2 PRBs and 4 PRBs.

According to an example embodiment of the present disclosure, a Modified Cyclic Delay Diversity (M-CDD) method is utilized to mitigate the Multi-layer DMRS PAPR issue. The M-CDD method multiplies the frequency-domain downlink (DL) layers with a linear phase shift prior to the multiplication with the precoder matrix. The slope of the phase shift "d" in frequency domain translates to the cyclic delay in time-domain. The cyclic delay "d" can range from 0 to the symbol length N-1. According to an example embodiment, the M-CCD method is implemented in the PHY layer (L1), e.g., at the distributed unit (DU) of the radio access network (RAN).

According to an example embodiment of the present disclosure, in a 3-layer example of the M-CCD method (shown in FIG. 7), only layer-2 is multiplied with the linear phase shift. In the 3-layer example of the M-CCD method shown in FIG. 7, pre-PMI frequency domain layer-2 signals are multiplied by a linear phase shift for all the symbol PRBs, while keeping layers 0 and 1 unmodified, as follows:

$$e^{\frac{j2\pi\bar{k}}{N}d}, \quad k = \{0..2047\}, \quad N = 2048, \quad \bar{k} = \left\lfloor \frac{k}{step} \right\rfloor step$$

where "d" is the cyclic delay, "step" is the number of REs (SCs) that will use the same phase shift value based on d, and "segments" (shown in FIG. 7) are the number of different phase shift values within a symbol of N REs. As shown in FIG. 7, the step value can be modified based on the tradeoff between PAPR improvement vs. calculation complexity (every "step" SCs or REs), i.e., the smaller the "step", the more segments to calculate the phase shift.

According to an example embodiment of the present disclosure, a segmentation "step" method can be applied to the linear phase shift, creating a fixed phase shift to a "step" number of resource elements (REs). The "step" length can be based on the PRG length of 2 PRBs and 4 PRBs.

The example embodiments of the methods according to the present disclosure are different from the known CDD and 3GPP Release 16 methods. First, in comparison to the known CDD approach, our M-CDD method proposes segmentation based on the PRG size (2PRBs or 4 PRBs). It will improve UE's channel estimation and thus Block Error Rate (BLER) performance since we keep the same multiplication factor to layers 2 and 3 throughout the PRG length.

Our M-OCC proposal is different than the low PAPR sequence generation methods for reference signals in 3GPP Release16 and does not require to upgrade from Release-15. In 4-layers case, for example, we only keep a single multiplication factor a = -1. The "a" factor only multiplies layer 3. Hence, the implementation is much simpler than what is proposed in Relelse-16. Also, in 3-layer we've invented a unique alternating multiplication factor method, again based on the PRG length, to mitigate the DMRS high PAPR without affecting the UE channel estimation.

Rel. 16 defines different scrambling codes for different CDM groups (Cannot be applied in Rel. 15 devices). See Figure 9 (from 38.211 specs of the two releases):

In this section, we reproduce the relevant section 7.4.1.1.1 of 5G NR Release 15 (3GPP TS 38.211 V15.8.0 (2018-09)) and section 7.4.1.1.1 of 5G NR Release 16 (3GPP TS 38.211 V16.2.0 (2020-06), corresponding to ETSI TS 138 211 V16.2.0 (2020-07)) for sequence generation in DMRS for PDSCH.

5G NR Release 15, 3GPP TS 38.211 V15.8.0 (2019-12), Section 7.4.1.1.1

$$c_{\text{init}} = \left(2^{17}\left(N_{\text{symb}}^{\text{slot}} n_{\text{s,f}}^{\mu} + l + 1\right)\left(2N_{\text{ID}}^{n_{\text{SCID}}} + 1\right) + 2N_{\text{ID}}^{n_{\text{SCID}}} + n_{\text{SCID}}\right) \bmod 2^{31}$$

where *l* is the OFDM symbol number within the slot, $n_{\text{s,f}}^{\mu}$ is the slot number within a frame, and

- $N_{\text{ID}}^{0}, N_{\text{ID}}^{1} \in \{0,1,\ldots,65535\}$ are given by the higher-layer parameters *scramblingID0* and *scramblingID1,* respectively, in the *DMRS-DownlinkConfig* IE if provided and the PDSCH is scheduled by PDCCH using DCI format 1_1 with the CRC scrambled by C-RNTI, MCS-C-RNTI, or CS-RNTI
- $N_{\text{ID}}^{0} \in \{0,1,\ldots,65535\}$ is given by the higher-layer parameter *scramblingID0* in the *DMRS-DownlinkConfig* IE if provided and the PDSCH is scheduled by PDCCH using DCI format 1_0 with the CRC scrambled by C-RNTI, MCS-C-RNTI, or CS-RNTI;

- $N_{\mathrm{ID}}^{n_{\mathrm{SCID}}} = N_{\mathrm{ID}}^{\mathrm{cell}}$ otherwise;

The quantity $n_{\mathrm{SCID}} \in \{0,1\}$ is given by the DM-RS sequence initialization field, in the DCI associated with the PDSCH transmission if DCI format 1_1 in [4, TS 38.212] is used, otherwise $n_{\mathrm{SCID}} = 0$.

<u>5G NR Release 16, 3GPP TS 38.211 V16.2.0 (2020-06), Section 7.4.1.1.1</u>

$$c_{\mathrm{init}} = \left(2^{17}\left(N_{\mathrm{symb}}^{\mathrm{slot}} n_{\mathrm{s,f}}^{\mu} + l + 1\right)\left(2N_{\mathrm{ID}}^{\bar{n}_{\mathrm{SCID}}^{\bar{\lambda}}} + 1\right) + 2^{17}\left\lfloor\frac{\bar{\lambda}}{2}\right\rfloor + 2N_{\mathrm{ID}}^{\bar{n}_{\mathrm{SCID}}^{\bar{\lambda}}} + \bar{n}_{\mathrm{SCID}}^{\bar{\lambda}}\right) \bmod 2^{31}$$

where $l$ is the OFDM symbol number within the slot, $n_{\mathrm{s,f}}^{\mu}$ is the slot number within a frame, and

- $N_{\mathrm{ID}}^{0}, N_{\mathrm{ID}}^{1} \in \{0,1,\dots,65535\}$ are given by the higher-layer parameters *scramblingID0* and *scramblingID1,* respectively, in the *DMRS-DownlinkConfig* IE if provided and the PDSCH is scheduled by PDCCH using DCI format 1_1 or 1_2 with the CRC scrambled by C-RNTI, MCS-C-RNTI, or CS-RNTI
- $N_{\mathrm{ID}}^{0} \in \{0,1,\dots,65535\}$ is given by the higher-layer parameter *scramblingID0* in the *DMRS-DownlinkConfig* IE if provided and the PDSCH is scheduled by PDCCH using DCI format 1_0 with the CRC scrambled by C-RNTI, MCS-C-RNTI, or CS-RNTI;
- $N_{\mathrm{ID}}^{\bar{n}_{\mathrm{SCID}}^{\bar{\lambda}}} = N_{\mathrm{ID}}^{\mathrm{cell}}$ otherwise;
- $\bar{n}_{\mathrm{SCID}}^{\bar{\lambda}}$ and $\bar{\lambda}$ are given by
    - if the higher-layer parameter *dmrs-Downlink-r16* in the DMRS-DownlinkConfig IE is provided

$$\bar{n}_{\mathrm{SCID}}^{\bar{\lambda}} = \begin{cases} n_{\mathrm{SCID}} & \lambda = 0 \text{ or } \lambda = 2 \\ 1 - n_{\mathrm{SCID}} & \lambda = 1 \end{cases}$$

$$\bar{\lambda} = \lambda$$

where $\lambda$ is the CDM group defined in clause 7.4.1.1.2.

    - otherwise by

$$\bar{n}_{\mathrm{SCID}}^{\bar{\lambda}} = n_{\mathrm{SCID}}$$

$$\bar{\lambda} = 0$$

The quantity $n_{\mathrm{SCID}} \in \{0,1\}$ is given by the DM-RS sequence initialization field, if present, in the DCI associated with the PDSCH transmission if DCI format 1_1 or 1_2 in [4, TS 38.212] is used, otherwise $n_{\mathrm{SCID}} = 0$.

As can be seen from comparing the above-reproduced sections of 5G NR Releases 15 and 16, one major difference is that 5G NR Release 16 defines different scrambling codes for different CDM groups (which methodology can't be applied in 5G NR Release 15 devices). More specifically, in 5G NR Release 16, DMRS $c_{\mathrm{init}}$ is dependent on the CDM group that eliminates the high PAPR when two CDM groups are used (i.e., above 2 layer). Therefore, the present invention applies to the gNB/distributed unit (DU) only, and is fully transparent to the radio unit (RU) and the user equipment (UE), and does not require any change in either the RU or the UE.

Although the example embodiments of the methods have been described in the present disclosure in the context of an O-RAN system, the present disclosure is equally applicable to any wireless system that supports 3GPP Release 15.

## Claims

1. A method for reducing peak-to-average power ratio (PAPR) of a multi-layer precoder matrix (PM)-combined demodulation reference signal (DMRS) symbol in a 5G New Radio (NR) transmission involving a radio access network (RAN), the method comprising:
   one of:

   a) performing, at a distributed unit (DU) of the RAN, a modified orthogonal cover code (M-OCC) method to reduce the PAPR of the multi-layer PM-combined DMRS, wherein the M-OCC method comprises;

      i. multiplying a PM with a specified multiplication factor in frequency domain to obtain a modified PM, and
      ii. subsequently multiplying at least one of multiple downlink (DL) layers with the modified PM; or

   b) performing, at a distributed unit (DU) of the RAN, a modified cyclic delay diversity (M-CDD) method to reduce the PAPR of the multi-layer PM-combined DMRS, wherein the M-CCD method comprises;

      i. multiplying at least one of multiple frequency-domain downlink (DL) layers with a specified linear phase shift to obtain phase-shifted DL layers, and
      ii. subsequently multiplying the phase-shifted DL layers with the PM.

2. The method according to claim 1, wherein the M-OCC method is performed for three DL layers comprising layer 0, layer 1 and layer 2.

3. The method according to claim 2, wherein the specified multiplication factor is applied to layer 2.

4. The method according to claim 3, wherein the value of b is one of -1 and 1.

5. The method according to claim 4, wherein i) the value of b is -1 for a precoder resource group (PRG) length of 2 physical resource blocks (PRBs), and ii) the value of b is 1 for a PRG length of 4 PRBs.

6. The method according to claim 3, wherein the layer 0 and the layer 1 are not multiplied by the specified multiplication factor.

7. The method according to claim 1, wherein the M-OCC method is performed for four DL layers comprising layer 0, layer 1, layer 2, and layer 3.

8. The method according to claim 7, wherein a specified multiplication factor is applied to layer 3.

9. The method according to claim 8, wherein the specified multiplication factor is -1.

10. The method according to claim 8, wherein the layer 0, the layer 1, and the layer 2 are not multiplied by the specified multiplication factor.

11. The method according to claim 1, wherein the M-CCD method is performed for three DL layers comprising layer 0, layer 1 and layer 2.

12. The method according to claim 11, wherein slope of the specified linear phase shift in frequency domain translates to a cyclic delay in time-domain.

13. The method according to claim 12, wherein the cyclic delay "d" can range from 0 to the symbol length N-1, and wherein N represents the number of resource elements (REs).

14. The method according to claim 11, wherein the layer-2 is multiplied with the specified linear phase shift.

**15.** The method according to claim 14, wherein the layer-0 and the layer-1 are not multiplied by the specified linear phase shift.

**16.** The method according to claim 15, wherein the specified phase shift is applied to a specified number of resource elements (REs) based on a precoder resource group (PRG) length.

**17.** The method according to claim 11, wherein the M-CCD method is performed for four DL layers comprising layer 0, layer 1, layer 2, and layer 3.

**18.** The method according to claim 17, wherein the layer-2 and the layer-3 are multiplied by the specified linear phase shift for all symbol physical resource blocks (PRBs).

**19.** The method according to claim 17, wherein the layer-0 and the layer-1 are not multiplied by the specified linear phase shift.

**20.** The method according to claim 19, wherein the specified phase shift is applied to a specified number of resource elements (REs) based on a precoder resource group (PRG) length.

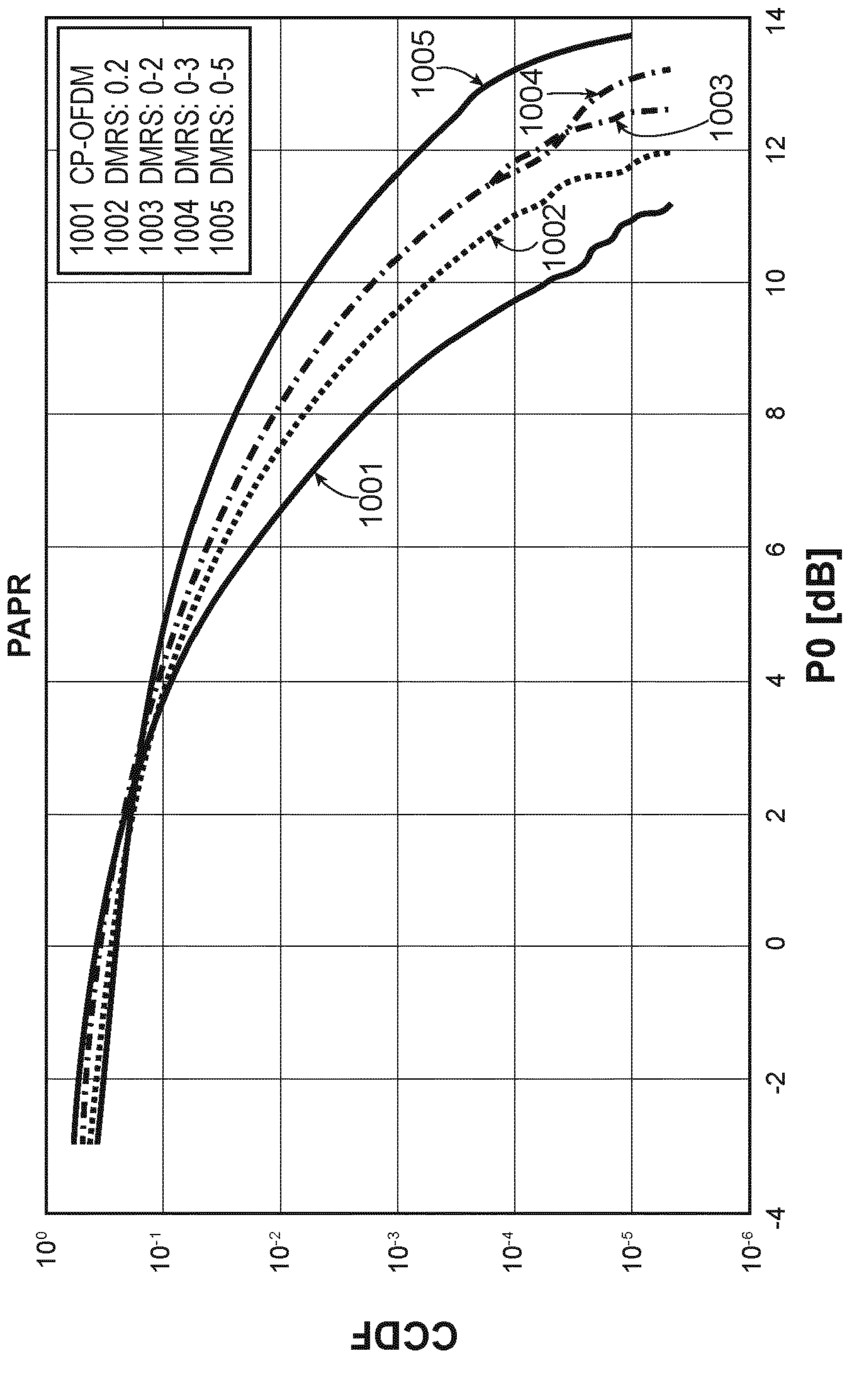
PAPR
CCDF
P0 [dB]
1001 CP-OFDM
1002 DMRS: 0.2
1003 DMRS: 0-2
1004 DMRS: 0-3
1005 DMRS: 0-5
1001
1002
1003
1004
1005
$10^0$
$10^{-1}$
$10^{-2}$
$10^{-3}$
$10^{-4}$
$10^{-5}$
$10^{-6}$
-4
-2
0
2
4
6
8
10
12
14

FIG. 1

| Sample PMI Matrix | | | |
|---|---|---|---|
| 1 | 1 | 1 | a*1 |
| 1 | -1 | 1 | a*-1 |
| 1 | 1 | -1 | a*-1 |
| 1 | -1 | -1 | a*1 |

X

| Port/ RE | 0 | 1 | 2 | 3 | 4 | 5 | 6 | 7 | 8 | 9 | 10 | 11 |
|---|---|---|---|---|---|---|---|---|---|---|---|---|
| 0 | r(0) | 0 | r(1) | 0 | r(2) | 0 | r(3) | 0 | r(4) | 0 | r(5) | 0 |
| 1 | r(0) | 0 | -r(1) | 0 | r(2) | 0 | -r(3) | 0 | r(4) | 0 | -r(5) | 0 |
| 2 | 0 | r(0) | 0 | r(1) | 0 | r(2) | 0 | r(3) | 0 | r(4) | 0 | r(5) |
| 3 | 0 | r(0) | 0 | -r(1) | 0 | r(2) | 0 | -r(3) | 0 | r(4) | 0 | -r(5) |

a=-1

=

| Ant/RE | 0 | 1 | 2 | 3 | 4 | 5 | 6 | 7 | 8 | 9 | 10 | 11 |
|---|---|---|---|---|---|---|---|---|---|---|---|---|
| 0 | r(0) | r(0)(1+a)/2 | 0 | r(1)(1-a)/2 | r(2) | r(2)(1+a)/2 | 0 | r(3)(1-a)/2 | r(4) | r(4)(1+a)/2 | 0 | r(5)(1-a)/2 |
| 1 | 0 | r(0)(1-a)/2 | r(1) | r(1)(1+a)/2 | 0 | r(2)(1-a)/2 | r(3) | r(3)(1+a)/2 | 0 | r(4)(1-a)/2 | r(5) | r(5)(1+a)/2 |
| 2 | r(0) | -r(0)(1+a)/2 | 0 | -r(1)(1-a)/2 | r(2) | -r(2)(1+a)/2 | 0 | -r(3)(1-a)/2 | r(4) | -r(4)(1+a)/2 | 0 | -r(5)(1-a)/2 |
| 3 | 0 | -r(0)(1-a)/2 | r(1) | -r(1)(1+a)/2 | 0 | -r(2)(1-a)/2 | r(3) | -r(3)(1+a)/2 | 0 | -r(4)(1-a)/2 | r(5) | -r(5)(1+a)/2 |

FIG. 2

| d | Step-[#RBs] | Step-[#SCs] | PAPR [dB] | Segments | Diff [dB] |
|---|---|---|---|---|---|
| 4 | 0 | 1 | 8.86 | 2048 | 0.00 |
| 4 | 0 | 6 | 8.98 | 342 | 0.12 |
| 4 | 1 | 12 | 8.99 | 171 | 0.13 |
| 4 | 2 | 24 | 8.94 | 86 | 0.08 |
| 4 | 3 | 36 | 8.93 | 57 | 0.07 |
| 4 | 4 | 48 | 9.03 | 43 | 0.17 |
| 4 | 5 | 60 | 9.05 | 35 | 0.19 |
| 4 | 6 | 72 | 9.06 | 29 | 0.20 |
| 4 | 7 | 84 | 9.06 | 25 | 0.20 |
| 4 | 10 | 120 | 9.05 | 18 | 0.19 |
| 4 | 20 | 240 | 9.11 | 9 | 0.25 |
| 4 | 40 | 480 | 9.12 | 5 | 0.26 |
| 40 | 50 | 600 | 9.17 | 4 | 0.31 |
| 4 | 60 | 960 | 9.21 | 3 | 0.35 |
| 16 | 80 | 960 | 8.94 | 3 | 0.08 |
| 4 | 106 | 1272 | 9.67 | 2 | 0.81 |
| | | 2048 | 11.13 | 1 | 2.27 |

FIG. 3

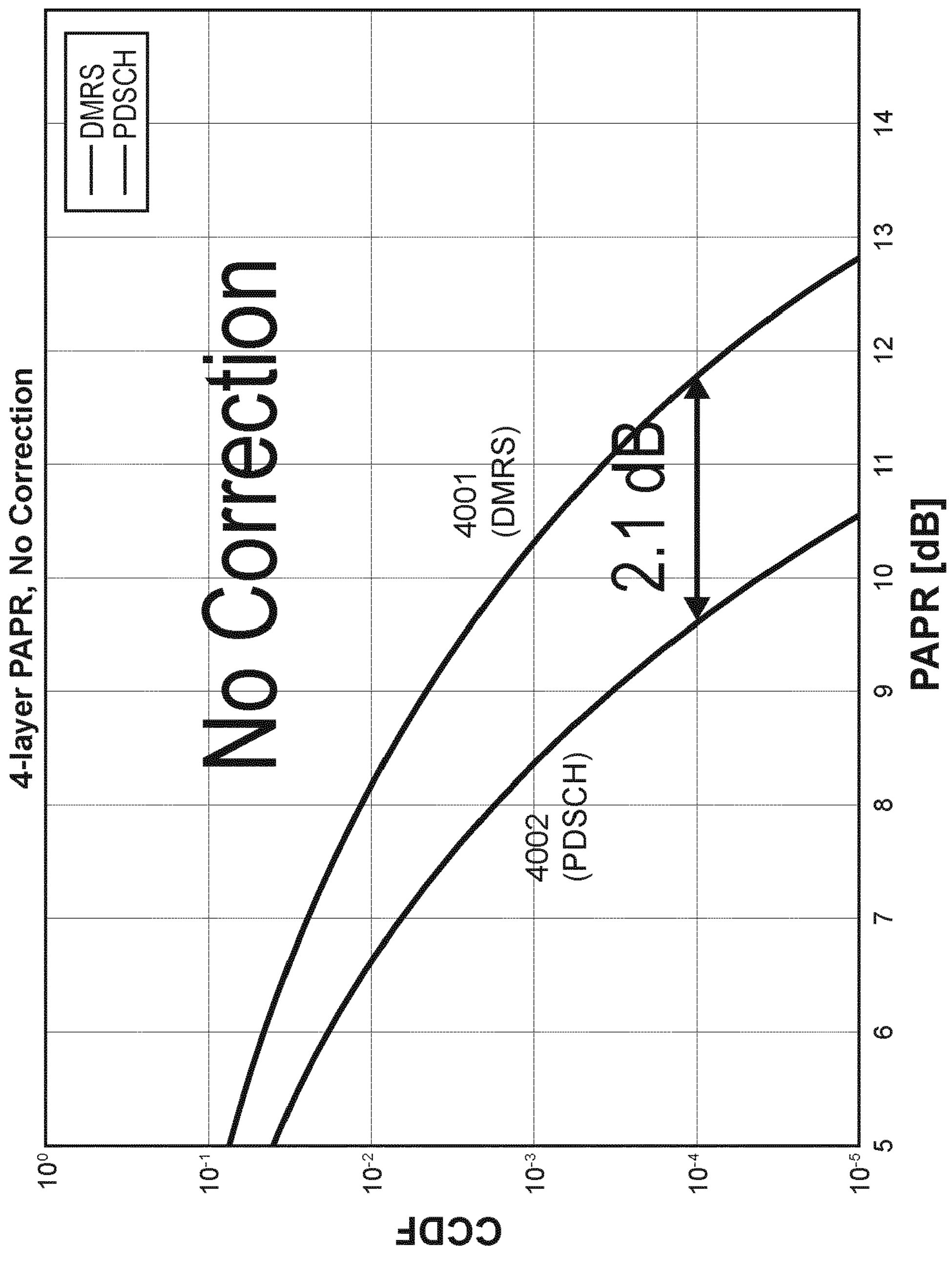
4-layer PAPR, No Correction
No Correction
DMRS
PDSCH
4001 (DMRS)
4002 (PDSCH)
2.1 dB
CCDF
$10^0$
$10^{-1}$
$10^{-2}$
$10^{-3}$
$10^{-4}$
$10^{-5}$
5
6
7
8
9
10
11
12
13
14
PAPR [dB]

FIG. 4a

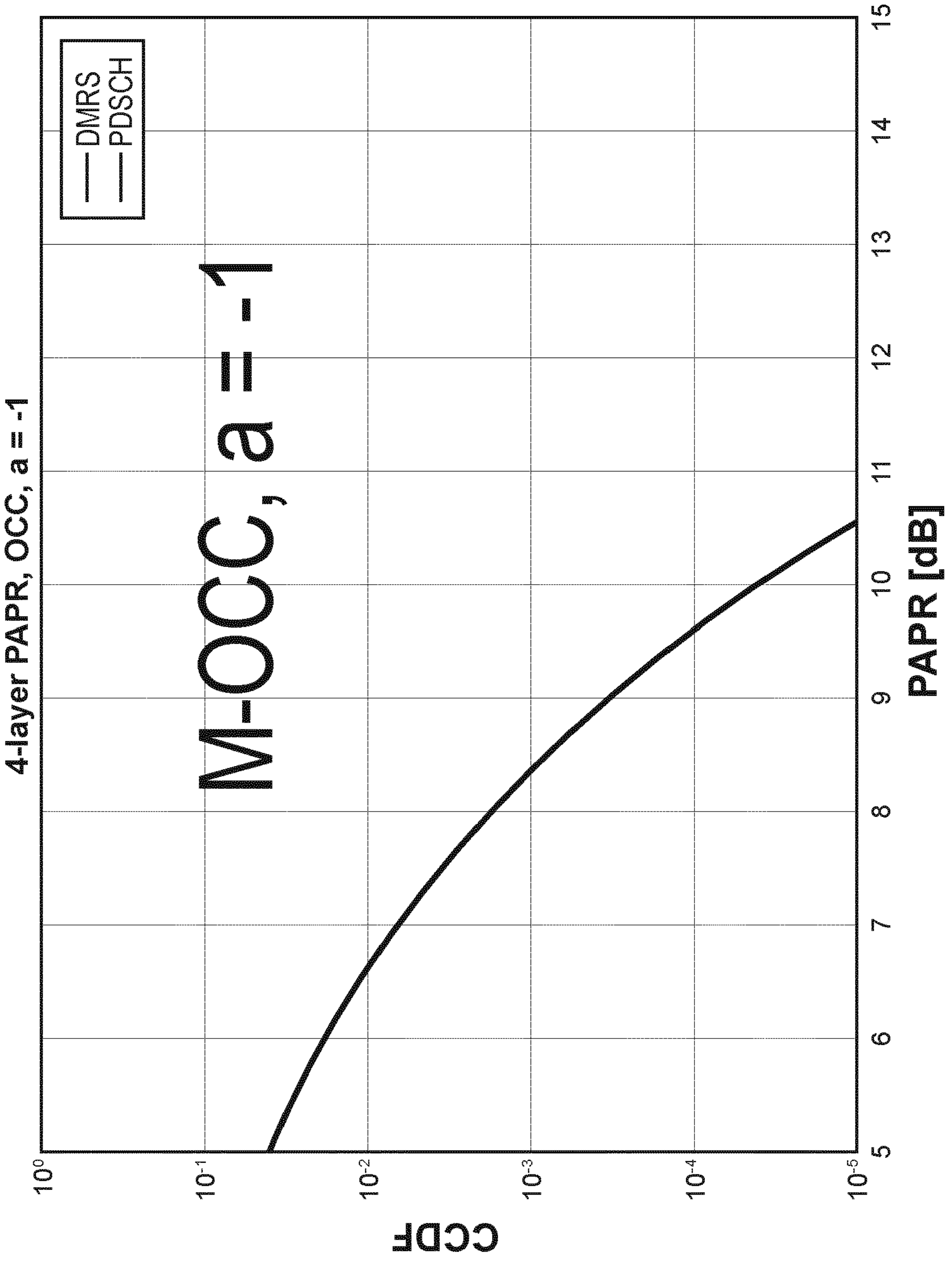
4-layer PAPR, OCC, a = -1
M-OCC, a = -1
DMRS
PDSCH
CCDF
10^0
10^-1
10^-2
10^-3
10^-4
10^-5
5
6
7
8
9
10
11
12
13
14
15
PAPR [dB]

FIG. 4b

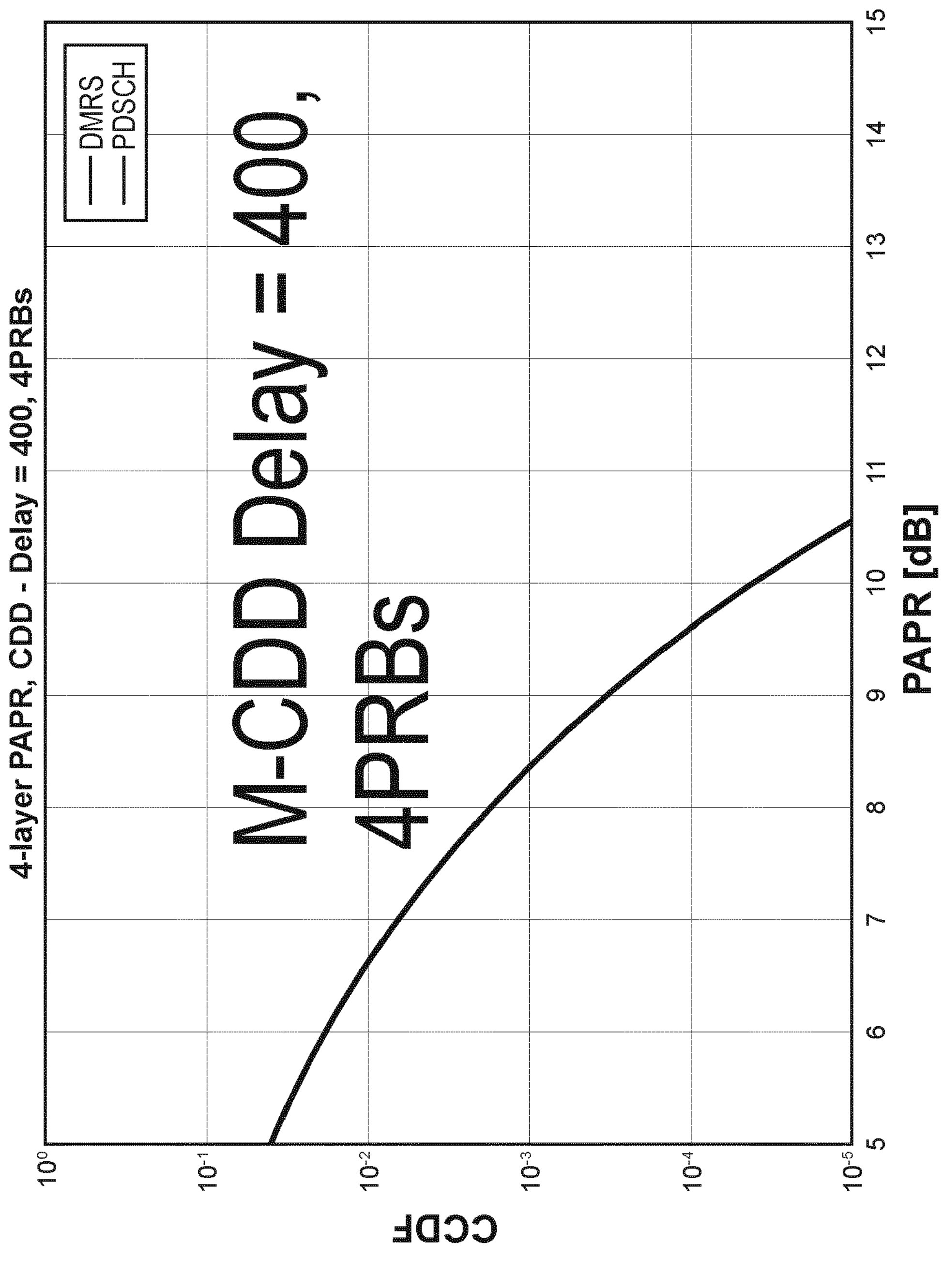
4-layer PAPR, CDD - Delay = 400, 4PRBs
DMRS
PDSCH
M-CDD Delay = 400, 4PRBs
CCDF
10^0
10^-1
10^-2
10^-3
10^-4
10^-5
5
6
7
8
9
10
11
12
13
14
15
PAPR [dB]

FIG. 4C

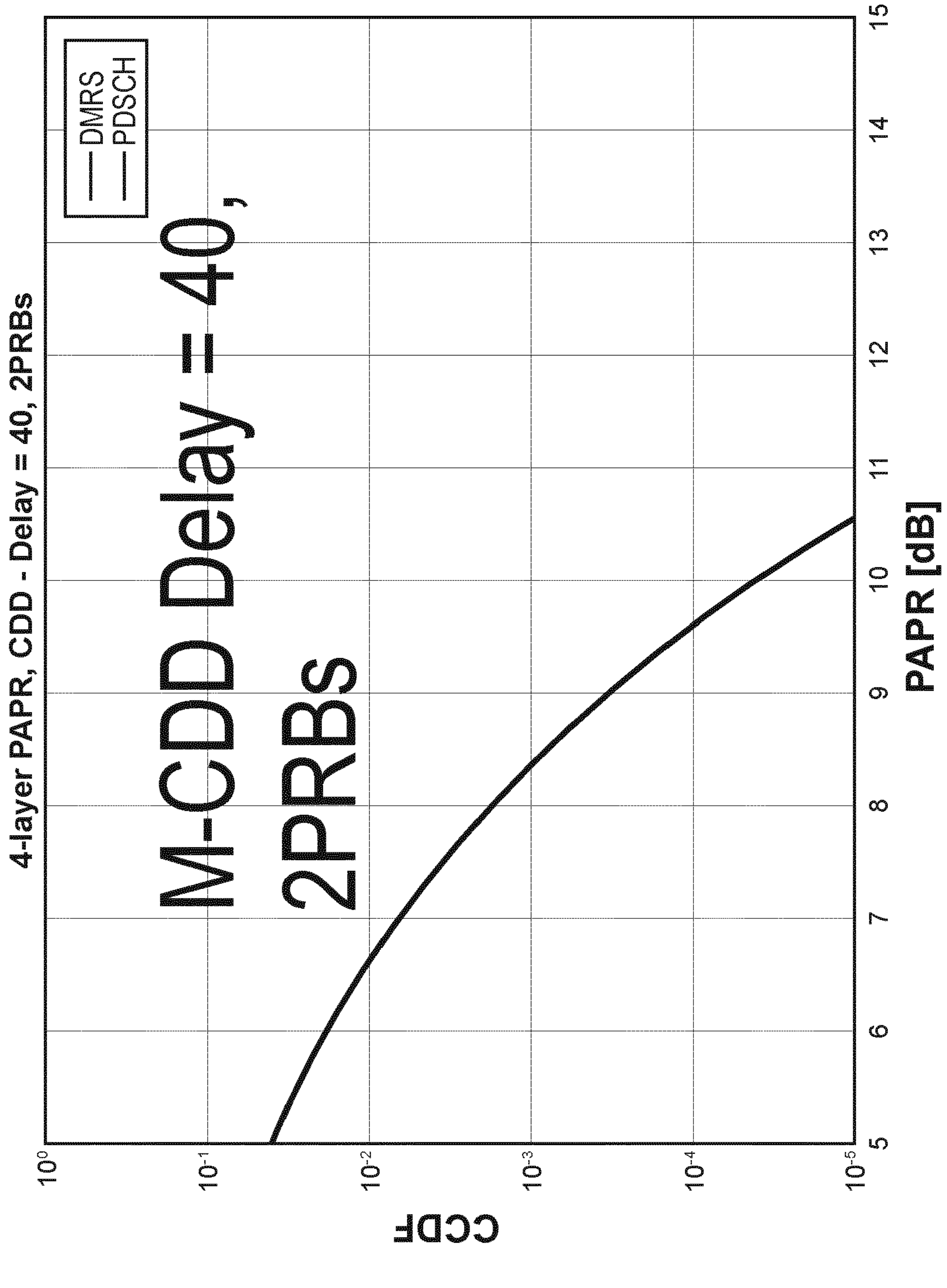
4-layer PAPR, CDD - Delay = 40, 2PRBs
DMRS
PDSCH
M-CDD Delay = 40, 2PRBs
CCDF
$10^0$
$10^{-1}$
$10^{-2}$
$10^{-3}$
$10^{-4}$
$10^{-5}$
5
6
7
8
9
10
11
12
13
14
15
PAPR [dB]

FIG. 4d

| Sample PMI Matrix | | |
|---|---|---|
| 1 | 1 | b(i)*1 |
| 1 | -1 | b(i)*1 |
| 1 | 1 | b(i)*-1 |
| 1 | -1 | b(i)*-1 |

X

| Port/ RE | 0 | 1 | 2 | 3 | 4 | 5 | 6 | 7 | 8 | 9 | 10 | 11 |
|---|---|---|---|---|---|---|---|---|---|---|---|---|
| 0 | r(0) | 0 | r(1) | 0 | r(2) | 0 | r(3) | 0 | r(4) | 0 | r(5) | 0 |
| 1 | r(0) | 0 | -r(1) | 0 | r(2) | 0 | -r(3) | 0 | r(4) | 0 | -r(5) | 0 |
| 2 | 0 | r(0) | 0 | r(1) | 0 | r(2) | 0 | r(3) | 0 | r(4) | 0 | r(5) |

$i = \{0:N_{RB}-1\}$

=

| Ant/RE | 0 | 1 | 2 | 3 | 4 | 5 | 6 | 7 | 8 | 9 | 10 | 11 |
|---|---|---|---|---|---|---|---|---|---|---|---|---|
| 0 | 2r(0) | b(i)*r(0) | 0 | b(i)*r(1) | 2r(2) | b(i)*r(2) | 0 | b(i)*r(3) | 2r(4) | b(i)*r(4) | 0 | b(i)*r(5) |
| 1 | 0 | b(i)*r(0) | 2r(1) | b(i)*r(1) | 0 | b(i)*r(2) | 2r(3) | b(i)*r(3) | 0 | b(i)*r(4) | 2r(5) | -b(i)*r(5) |
| 2 | 2r(0) | -b(i)*r(0) | 0 | -b(i)*r(1) | 2r(2) | -b(i)*r(2) | 0 | -b(i)*r(3) | 2r(4) | -b(i)*r(4) | 0 | -b(i)*r(5) |
| 3 | 0 | -b(i)*r(0) | 2r(1) | -b(i)*r(1) | 0 | -b(i)*r(2) | 2r(3) | -b(i)*r(3) | 0 | -b(i)*r(4) | 2r(5) | -b(i)*r(5) |

FIG. 5

Option 3 4PRBs b

| 3 layer OCC | | | |
|---|---|---|---|
| PRB | Layer0/dmrs port0 | Layer1/dmrs port1 | Layer2/dmrs port2 |
| 0 | 1 | 1 | -1 |
| 1 | 1 | 1 | -1 |
| 2 | 1 | 1 | -1 |
| 3 | 1 | 1 | -1 |
| 4 | 1 | 1 | 1 |
| 5 | 1 | 1 | 1 |
| 6 | 1 | 1 | 1 |
| 7 | 1 | 1 | 1 |
| 8 | 1 | 1 | -1 |
| 9 | 1 | 1 | -1 |
| 10 | 1 | 1 | -1 |
| 11 | 1 | 1 | -1 |
| 12 | 1 | 1 | 1 |
| 13 | 1 | 1 | 1 |
| 14 | 1 | 1 | 1 |
| 15 | 1 | 1 | 1 |
| 16 | 1 | 1 | -1 |
| 17 | 1 | 1 | -1 |
| 18 | 1 | 1 | -1 |
| 19 | 1 | 1 | -1 |

PMI=4x3

Before PMI

Option 2 2PRBs b

| 3 layer OCC | | | |
|---|---|---|---|
| PRB | Layer0/dmrs port0 | Layer1/dmrs port1 | Layer2/dmrs port2 |
| 0 | 1 | 1 | -1 |
| 1 | 1 | 1 | -1 |
| 2 | 1 | 1 | 1 |
| 3 | 1 | 1 | 1 |
| 4 | 1 | 1 | -1 |
| 5 | 1 | 1 | -1 |
| 6 | 1 | 1 | 1 |
| 7 | 1 | 1 | 1 |
| 8 | 1 | 1 | -1 |
| 9 | 1 | 1 | -1 |
| 10 | 1 | 1 | 1 |
| 11 | 1 | 1 | 1 |
| 12 | 1 | 1 | -1 |
| 13 | 1 | 1 | -1 |
| 14 | 1 | 1 | 1 |
| 15 | 1 | 1 | 1 |
| 16 | 1 | 1 | -1 |
| 17 | 1 | 1 | -1 |
| 18 | 1 | 1 | 1 |
| 19 | 1 | 1 | 1 |

PMI=4x3

FIG. 6

| d | Step-[#RBs] | Step-[#SCs] | PAPR [dB] | Segments | Diff [dB] |
|---|---|---|---|---|---|
| 40 | 0 | 1 | 8.98 | 2048 | 0.00 |
| 40 | 0 | 6 | 8.94 | 342 | -0.04 |
| 40 | 1 | 12 | 8.97 | 171 | -0.01 |
| 40 | 2 | 24 | 8.99 | 86 | 0.02 |
| 40 | 3 | 36 | 9.00 | 57 | 0.02 |
| 40 | 4 | 48 | 9.00 | 43 | 0.03 |
| 40 | 5 | 60 | 9.02 | 35 | 0.04 |
| 40 | 6 | 72 | 8.92 | 29 | -0.06 |
| 40 | 7 | 84 | 9.00 | 25 | 0.02 |
| 40 | 10 | 120 | 8.98 | 18 | 0.00 |
| 40 | 20 | 240 | 9.04 | 9 | 0.06 |
| 4 | 40 | 480 | 9.02 | 5 | 0.04 |
| 40 | 50 | 600 | 9.26 | 4 | 0.28 |
| 4 | 60 | 720 | 9.18 | 3 | 0.20 |
| 16 | 80 | 960 | 9.07 | 3 | 0.10 |
| 4 | 106 | 1272 | 9.34 | 2 | 0.35 |
|  |  | 2048 | 10.41 | 1 | 1.43 |

FIG. 7

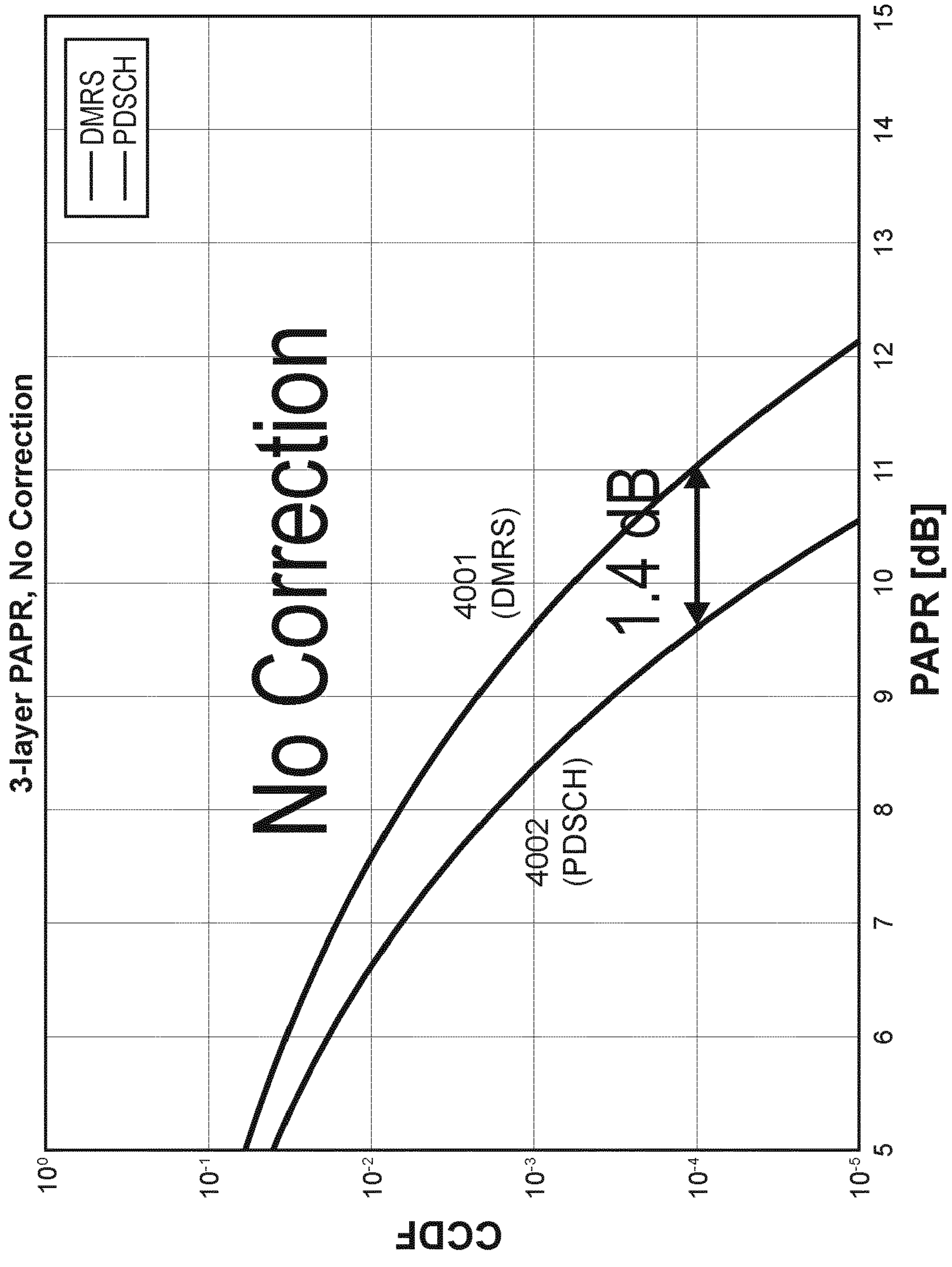
3-layer PAPR, No Correction
DMRS
PDSCH
No Correction
4001
(DMRS)
4002
(PDSCH)
1.4 dB
CCDF
$10^{0}$
$10^{-1}$
$10^{-2}$
$10^{-3}$
$10^{-4}$
$10^{-5}$
5
6
7
8
9
10
11
12
13
14
15
PAPR [dB]

FIG. 8a

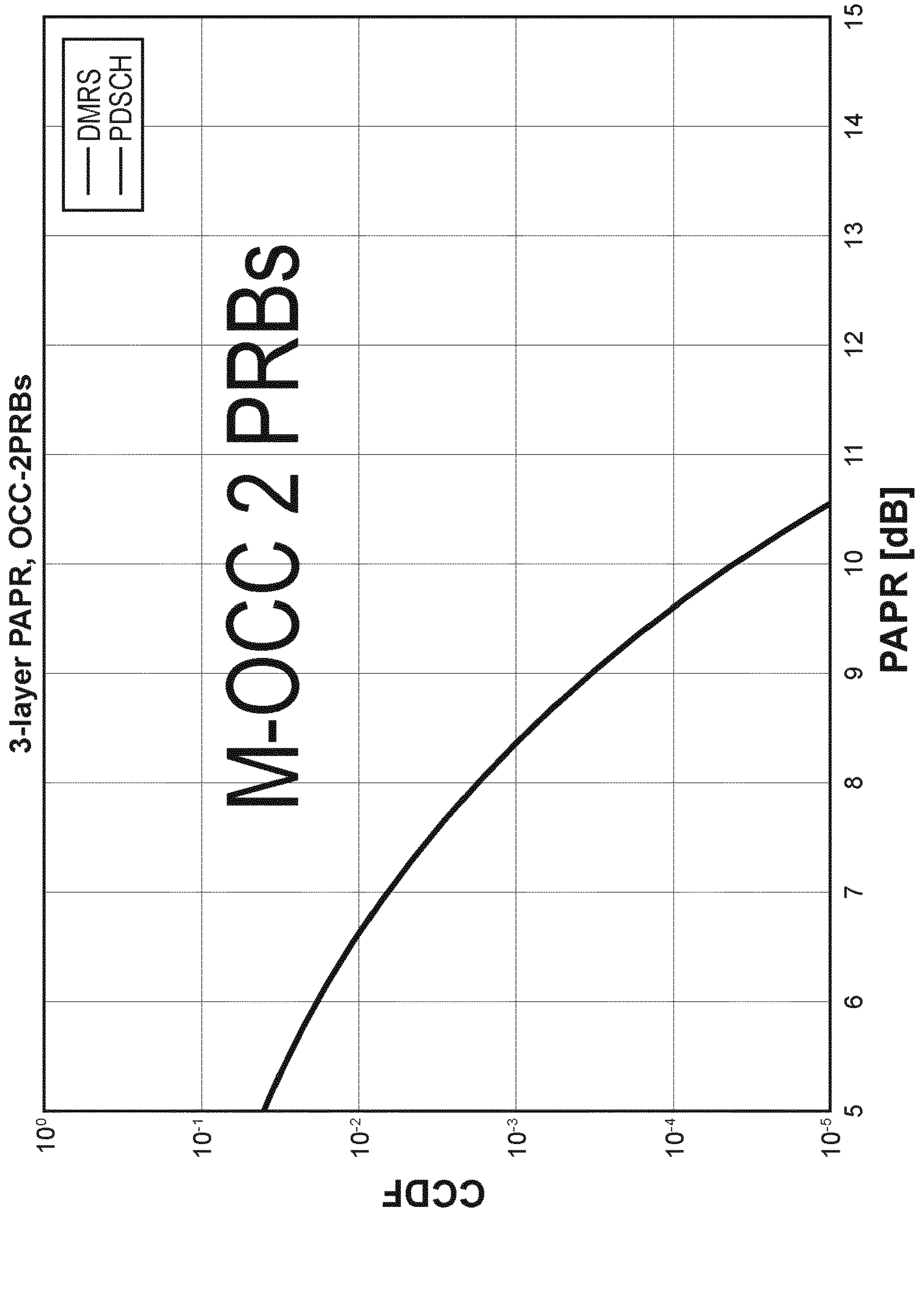
3-layer PAPR, OCC-2PRBs
M-OCC 2 PRBs
DMRS
PDSCH
CCDF
$10^0$
$10^{-1}$
$10^{-2}$
$10^{-3}$
$10^{-4}$
$10^{-5}$
PAPR [dB]
5
6
7
8
9
10
11
12
13
14
15

FIG. 8b

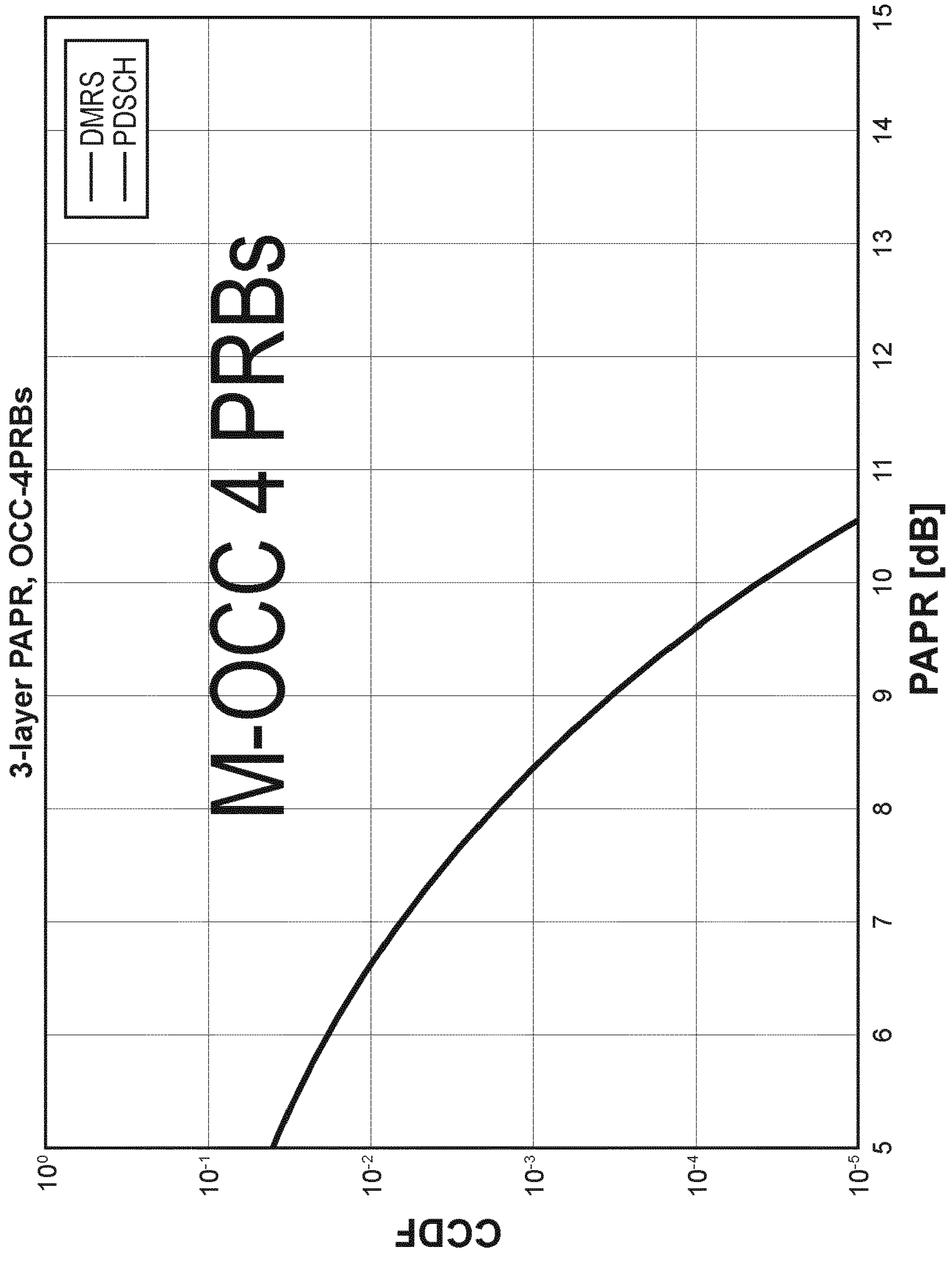
3-layer PAPR, OCC-4PRBs
M-OCC 4 PRBs
DMRS
PDSCH
CCDF
PAPR [dB]
$10^{0}$
$10^{-1}$
$10^{-2}$
$10^{-3}$
$10^{-4}$
$10^{-5}$
5
6
7
8
9
10
11
12
13
14
15

FIG. 8C

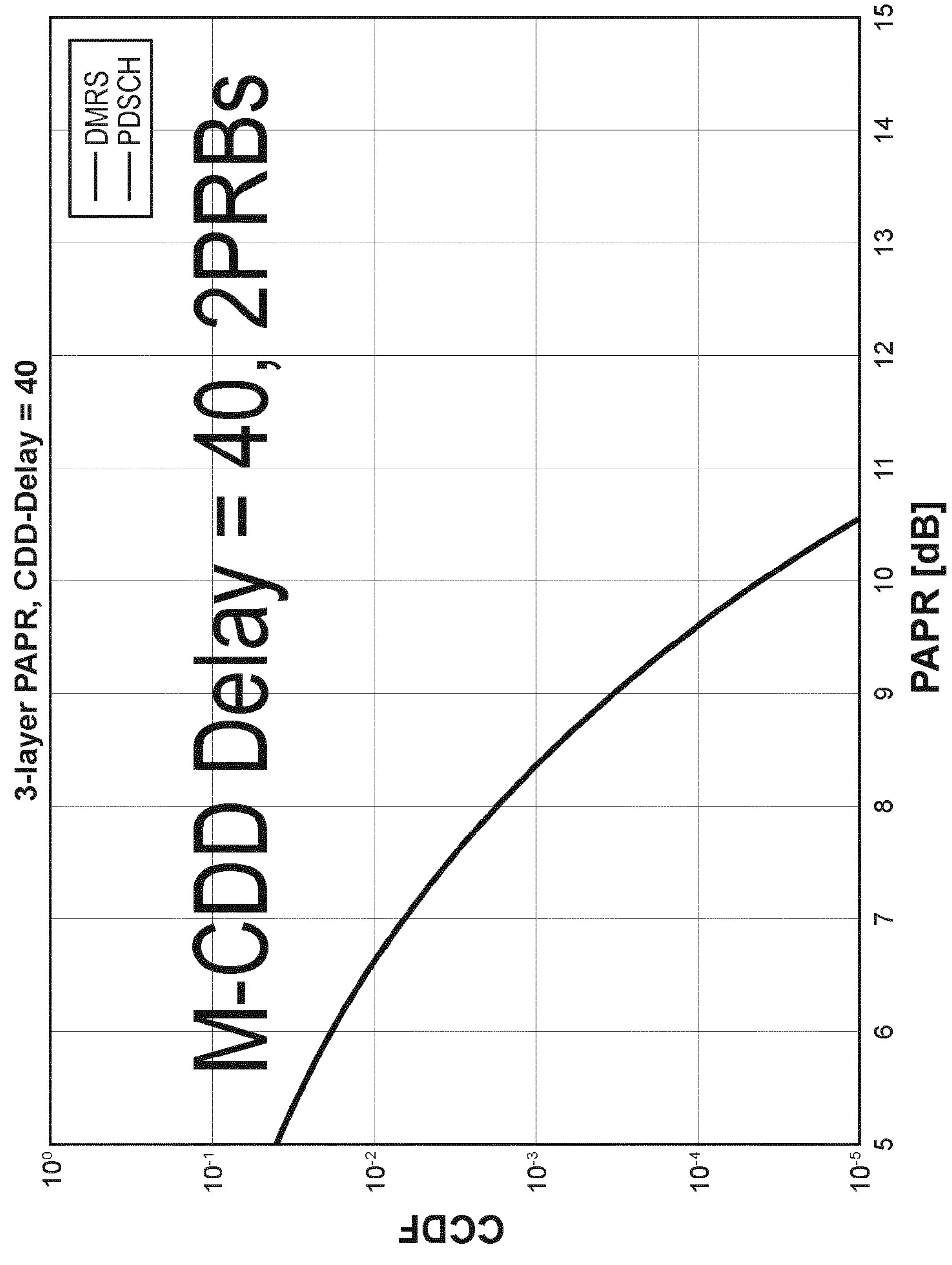
3-layer PAPR, CDD-Delay = 40
DMRS
PDSCH
M-CDD Delay = 40, 2PRBs
CCDF
$10^{0}$
$10^{-1}$
$10^{-2}$
$10^{-3}$
$10^{-4}$
$10^{-5}$
5
6
7
8
9
10
11
12
13
14
15
PAPR [dB]

FIG. 8d